# EUROPÄISCHE PATENTSCHRIFT

(11) **EP 1 902 238 B1**
(45) Veröffentlichungstag und Bekanntmachung des Hinweises auf die Patenterteilung: **28.05.2014**
(21) Anmeldenummer: 06761714.2
(22) Anmeldetag: 27.06.2006
(51) Int. Cl.: F16H 61/22, F16H 59/02

(54) **BETÄTIGUNGSEINRICHTUNG MIT SCHALTSPERRE**
ACTIVATION DEVICE WITH SHIFT LOCK
DISPOSITIF D'ACTIONNEMENT AVEC BLOCAGE DU CHANGEMENT DES VITESSES

(30) Priorität: 14.07.2005 DE 102005033510
(43) Veröffentlichungstag der Anmeldung: 26.03.2008
(73) Patentinhaber: ZF Friedrichshafen AG, 88038 Friedrichshafen (DE)
(72) Erfinder: GIEFER, Andreas, 49448 Lemförde (DE); MEYER, Jörg, 49419 Wagenfeld (DE)
(86) Internationale Anmeldenummer: PCT/DE2006/001106
(87) Internationale Veröffentlichungsnummer: WO 2007/009415

(56) Entgegenhaltungen:
- DE-A1-102004 060 232
- US-A1- 2006 016 287
- US-B1- 6 325 196

## Beschreibung

Die Erfindung betrifft eine Einrichtung zur manuellen Steuerung bzw. Betätigung eines technischen Systems gemäß dem Oberbegriff des Patentanspruchs 1.

Gattungsgemäße Betätigungseinrichtungen kommen beispielsweise, jedoch keineswegs ausschließlich, zur manuellen Auswahl von Schaltstufen bzw. zur Gangvorwahl bei Gangwechselgetrieben von Kraftfahrzeugen zum Einsatz.

Bei einer zunehmenden Anzahl von Kraftfahrzeugtypen erfolgt die Gangvorwahl, bzw. die Steuerung des Betriebszustands des Fahrzeuggetriebes heute mittels elektrischer bzw. elektronischer Signalübertragung. Eine dergestalt ohne mechanische Verbindung auskommende elektrische bzw. elektronische Ansteuerung technischer Systeme oder Getriebe bringt jedoch zunächst unvermeidlich eine Reihe von Besonderheiten mit sich. So erhält der Bediener bzw. Fahrer - im Gegensatz zur Bedienung mittels der bekannten mechanischen Betätigungseinrichtungen - im allgemeinen keinerlei unmittelbare Rückmeldung über eine mögliche Unzulässigkeit seines Betätigungswunsches.

Um in bestimmten Situationen Fehlbedienungen zu vermeiden, beispielsweise um dem Fahrer eines Kraftfahrzeugs bestimmte Fahrzeugzustände oder Störungen (z.B. Ausfall der Kommunikation zwischen Schaltung und Getriebe) zu signalisieren, sind Betätigungseinrichtungen oftmals mit Sperrsystemen ausgestattet, die bei Vorliegen gewisser Randbedingungen bestimmte Bewegungen des Betätigungselements nicht mehr zulassen.

So führt beispielsweise das aus dem Kraftfahrzeugbereich bekannte, sog. Keylock-System einer Betätigungseinrichtung für ein automatisches Gangwechselgetriebe zu einer Sperrung des Betätigungselements bzw. des Wählhebels in der Position "P" (Parksperre). Damit soll insbesondere verhindert werden, dass der Wählhebel vor dem Anlassen des Motors in eine der Fahrstufen bewegt wird, womit sich das Fahrzeug bereits beim Anlassen unerwünscht in Bewegung setzen könnte.

Ein weiteres Beispiel für den Einsatz einer Sperreinrichtung ist bei einem automatisierten Fahrzeuggetriebe die P/N-Sperre, die dazu dient, dass aus Sicherheitsgründen nur bei getretener Bremse aus den Schaltstellungen "P" (Parksperre) und "N" (Neutral) herausgeschaltet werden kann. Dies dient ebenfalls dem Zweck, ein unkontrolliertes Anfahren des Fahrzeugs bereits im Moment des Einlegens einer Fahrstufe zu verhindern.

Bei den immer häufiger anzutreffenden Betätigungseinrichtungen mit elektrischer bzw. elektronischer Signalübertragung, die ohne jegliche mechanische Verbindung zwischen dem Betätigungselement und dem damit gesteuerten System, bzw. auch ohne mechanische Verbindung mit den Sperreinrichtungen wie z.B. Keylock- oder P/N-Sperre auskommen, werden zur Realisierung solcher Sperrfunktionen häufig elektromechanische Aktuatoren verwendet.

Dies bedeutet mit anderen Worten, dass die situationsabhängige Sperrung des Betätigungselements nicht mehr über Gestänge oder Seilzüge erfolgt, sondern dass vielmehr nur noch elektrische bzw. elektronische Signale zur Betätigungseinrichtung übermittelt werden. Diese werden sodann in der Betätigungseinrichtung umgesetzt und zur Ansteuerung der entsprechenden elektrischen Aktuatoren der Sperreinrichtung verwendet. Als Aktuatoren werden dabei oftmals elektromagnetisch betätigte Anker eingesetzt.

Aufgrund der Mehrzahl an Sperrmimiken insbesondere bei shift-by-wire-Gangwechselgetrieben, bei denen zudem oftmals auch noch eine situationsabhängige Einschränkung der Bewegbarkeit des Schalthebels vorgesehen ist, sind nach dem Stand der Technik bei den bekannten Betätigungseinrichtungen häufig verhältnismäßig komplexe Sperrsysteme erforderlich. Bei den bestehenden Sperrsystemen erfolgt die Steuerung bzw. Sperrung dabei zumeist unter Einsatz von Elektromagneten, die jeweils in Abhängigkeit vom Stromfluss einen Anker bewegen. Dabei gibt es jedoch für den Anker nur zwei mögliche Positionen, die mit den beiden Zuständen "bestromt" bzw. "unbestromt" korrespondieren.

Mit anderen Worten bedeutet dies jedoch, dass auf diese Weise mit einem Aktuator auch nur zwei diskrete Sperrzustände dargestellt werden können, beispielsweise "gesperrt" bzw. "ungesperrt". Daraus ergibt sich jedoch die Notwendigkeit, bei den immer komplexer werdenden Sperrsystemen, die beispielsweise bei den Betätigungseinrichtungen von shift-by-wire-Getrieben zum Einsatz kommen, eine zunehmende Zahl an elektromagnetischen Aktuatoren vorzusehen, die für sich genommen jeweils zwei Schaltstellungen aufweisen.

Dies ist jedoch nachteilig insofern, als der für diese Mehrzahl an Aktuatoren vorzusehende Bauraum nicht ohne weiteres zur Verfügung steht. Ferner besitzen derartige elektromagnetische Aktuatoren aufgrund der darin vorhandenen Kupferwicklungen in eine nicht unerhebliche Masse, was zu einer unerwünschten Gewichtserhöhung der Schalteinheit beiträgt. Nicht zuletzt verursacht die Mehrzahl an separaten Aktuatoren auch eine Erhöhung der Kosten für die Schalteinheit, was aufgrund des Kostendrucks im Bereich technischer Kraftfahrzeugsysteme oft nicht akzeptabel ist.

Die US 6325196 B1 offenbart einen Schalthebel für Getriebe von Personenkraftwagen, insbesondere mit einer Einrichtung zur Steuerung der Bewegungsmöglichkeiten des Schalthebels. Durch Bewegung des Schalthebels in Längsrichtung entlang einer ersten Schaltgasse sind verschiedene Fahrstufen des Getriebes wählbar. Darüber hinaus kann, je nach Schaltstellung des Schalthebels, durch eine seitliche Bewegung quer zur Längsrichtung eine zweite Schaltgasse angewählt werden, welche parallel zu der ersten Schaltgasse angeordnet ist. Ein Aktuator, bestehend aus einer Magnetspule und einem ausfahrbaren Bolzen, weist an einem freien Ende des Bolzens eine Kontur mit unterschiedlichen Durchmessern auf. Über die Magnetspule ist der Bolzen in wenigstens drei Schaltstellungen positionierbar. Das freie Ende des Bolzens greift in eine partiell radial umlaufende Ausnehmung in einer unteren Wand eines Verriegelungsbauteils ein, wobei das Verriegelungsbauteil drehbar gelagert und mit dem Schalthebel verbunden ist. Mit Änderung der Schaltposition des Schalthebels entlang der ersten Schaltgasse rotiert das Verriegelungsbauteil um einen Schwenkstift. Je nach Schaltposition des Schalthebels und Schaltstellung des Bolzens, greift der Bolzen formschlüssig in die Kontur der Ausnehmung ein. Auf diese Weise ist eine selektive Arretierung des Verriegelungsbauteils und somit des Schalthebels in verschiedenen Schaltpositionen der ersten Schaltgase herstellbar.

Mit diesem Hintergrund ist es Aufgabe der vorliegenden Erfindung, eine Einrichtung zur Betätigung eines technischen Systems, beispielsweise zur elektrischen bzw. elektronischen shift-by-wire-Betätigung eines Gangwechselgetriebes zu schaffen, die eine Sperreinrichtung aufweist und mit der sich die genannten Nachteile des Standes der Technik überwinden lassen. Insbesondere soll die Sperreinrichtung auch im Fall komplexer Sperrmimiken mit einer möglichst geringen Anzahl an Aktuatoren auskommen, womit insbesondere Gewicht, Bauraum und Kosten eingespart werden sollen.

Diese Aufgabe wird durch eine Betätigungseinrichtung mit den Merkmalen von Patentanspruch 1 gelöst. Bevorzugte Ausführungsformen sind Gegenstand der Unteransprüche.

Die erfindungsgemäße Betätigungseinrichtung umfasst in an sich zunächst bekannter Weise einen Schalthebel, der in zumindest zwei verschiedene Schaltstellungen verbracht werden kann. Ferner umfasst die Betätigungseinrichtung eine Sperreinrichtung zur Einschränkung des Schaltwegs des Schalthebels, bzw. zur Sperrung des Schalthebels gegen Schaltbewegungen, wobei die Sperreinrichtung zumindest einen Aktuator aufweist.

Die Betätigungseinrichtung zeichnet sich jedoch dadurch aus, dass der Aktuator zumindest drei unterschiedliche Schaltzustände aufweist bzw. einnehmen kann.

Dies bedeutet mit anderen Worten, dass bereits mit nur einem einzigen Aktuator zumindest drei verschiedene Sperrzustände für das Betätigungselement darstellbar sind.

Auf diese Weise werden die eingangs beschriebenen Nachteile bei Betätigungseinrichtungen mit aufwändigeren Schaltmimiken bzw. mit einer Mehrzahl an Sperrzuständen reduziert bzw. beseitigt. Denn dank des zumindest drei unterschiedliche Schaltzustände aufweisenden Aktuators lässt sich auch bereits mit nur einem einzigen Aktuator eine erhebliche Anzahl an unterschiedlichen Sperrzuständen beispielsweise des Schalthebels einer Getriebebetätigungseinheit realisieren. Somit wird sowohl konstruktiver Aufwand eingespart, ferner können - insbesondere bei komplexen Sperranforderungen - auch Gewicht, Bauraum und Kosten gegenüber dem Stand der Technik reduziert werden.

Die Betätigungseinrichtung wird dabei zunächst einmal unabhängig davon verwirklicht, wie die Sperreinrichtung bzw. der Aktuator konstruktiv ausgeführt und angeordnet ist, solange mit Sperreinrichtung bzw. Aktuator eine zuverlässige Sperrung der entsprechenden Freiheitsgrade des Betätigungselements sichergestellt ist. Art und Herkunft der Hilfsenergie sind ebenfalls zunächst nicht wesentlich.

Besonders bevorzugt ist der Aktuator jedoch elektrisch betätigbar, bzw. basiert der Aktuator auf dem elektromagnetischen Wirkprinzip. Elektrisch, bzw. insbesondere elektromagnetisch betätigte Aktuatoren sind zuverlässig und erlauben eine vergleichsweise platzsparende Konstruktion einer Betätigungseinrichtung bzw. Getriebebetätigungseinheit.

Bevorzugt kann der Aktuator als Linearmotor ausgeführt sein. Dies hat insbesondere den Vorteil, dass sich durch den Einsatz eines Linearmotors eine noch größere Anzahl an verschiedenen Schaltzuständen bzw. Sperrzuständen mit nur einem einzigen Aktuator realisieren lässt. Denn das Ankerelement eines Linearmotors kann dank der besonderen Eigenschaften des Linearmotors innerhalb seines linearen Bewegungsbereichs praktisch beliebig positioniert werden. Daher können eine Mehrzahl an verschiedenen Relativpositionen des Ankerelements eines Linearmotors konstruktiv jeweils ebenfalls unterschiedlichen Sperrzuständen der Betätigungseinrichtung zugeordnet werden.

In einer weiteren, bevorzugten Ausführungsform der Erfindung weist der Aktuator einen Ankerstift auf. Der Aktuator, genauer gesagt das Ankerelement des Aktuators, ist mit einer beweglichen Sperrkulisse verbunden. Da die Sperrkulisse mit einer praktisch beliebigen Kulissenform ausgeführt werden kann, lassen sich auf diese Weise trotz der einfachen linearen Bewegung des Ankerelements auch verhältnismäßig komplexe Sperrmimiken realisieren. Bevorzugt ist die Sperrkulisse quer zur Fahrtrichtung hin und her bewegbar.

Besonders bevorzugt ist dabei der Aktuator mit mehr als einer beweglichen Sperrkulisse verbunden. Mit anderen Worten bedeutet dies, dass mehrere voneinander separate, bewegliche Sperrkulissen, oder auch bewegliche Sperrriegel, mit ein und demselben Aktuator verbunden sind, bzw. von ein und demselben Aktuator gesteuert werden. Dies ist vorteilhaft insofern, als sich auf diese Weise noch komplexere Sperrmimiken realisieren lassen. Insbesondere können auf diese Weise auch Sperrfunktionen in unterschiedlichen Bewegungsrichtungen bzw. Bewegungsebenen des Betätigungselements gleichzeitig oder unabhängig voneinander realisiert werden.

Das heißt, dass durch den einzigen Aktuator bevorzugt sowohl eine mehrstufige Sperrung der Beweglichkeit des Schalthebels in Fahrtrichtung, als auch eine situationsabhängige Sperrung der Beweglichkeit des Schalthebels quer zu der Fahrtrichtung realisierbar ist

Prinzipiell wird die Erfindung verwirklicht unabhängig davon, welcher Art die Betätigungseinrichtung ist, und welches technische System durch die Betätigungseinrichtung bzw. das Betätigungselement gesteuert wird. Gemäß einer bevorzugten Ausführungsform der Erfindung ist jedoch das Betätigungselement ein Wählhebel eines Kraftfahrzeuggetriebes, insbesondere eines shift-by-wire-Fahrzeuggetriebes bzw. eines Automatikgetriebes. Im Bereich der Betätigung von Fahrzeuggetrieben lässt sich die Erfindung mit besonderem Vorteil zum Einsatz bringen, da hier oftmals eine Mehrzahl an sicherheitsrelevanten Sperrsystemen darzustellen ist, wobei diese Sperrsysteme mit möglichst geringem konstruktivem Aufwand im Bereich des Betätigungselements, zum Beispiel zwischen den Frontsitzen eines Kraftfahrzeugs, unterzubringen sind.

In einer besonders bevorzugten Ausführungsform weist der Schalthebel zwischen zwei Enden die Kontur einer Gelenkkugel auf. Der Schalthebel ist bevorzugt mittels der Gelenkkugel in einem Gehäuse gelagert. Durch die Lagerung des Schalthebels ist der Schalthebel in dem Gehäuse bevorzugt in Fahrtrichtung und quer zu dieser bewegbar.

In einer besonders bevorzugten Form der Ausgestaltung weist die Gelenkkugel zumindest zwei Erhebungen auf, welche sich bevorzugt gegenüber liegen. Die Erhebungen auf der Gelenkkugel greifen bevorzugt in Ausnehmungen in dem Gehäuse, wodurch die Beweglichkeit des Schalthebels in Fahrtrichtung beschränkbar ist. Darüber hinaus bewirken die Vorsprünge bevorzugt, dass ein Verdrehen bzw. Rotieren des Schalthebels um eine Hochachse ausgeschlossen ist. Unter der Hochachse ist eine Achse zu verstehen, welche senkrecht zu einer Längsachse angeordnet ist, wobei die Längsachse bevorzugt jeweils durch Mittelpunkte der Vorsprünge und der Gelenkkugel verläuft. Weiter liegt die Hochachse in einer Ebene, welche den Schalthebel mittig schneidet und senkrecht zu der Mittellinie angeordnet ist.

Gemäß einer weiteren, bevorzugten Ausführungsform der Erfindung befinden sich Sperreinrichtung und zugehöriger Aktuator bei Fehlen der Hilfsenergie in einer Stellung, in welcher das Betätigungselement blockiert bzw. die Beweglichkeit des Betätigungselements am stärksten eingeschränkt ist. Dies bedeutet mit anderen Worten, dass beispielsweise bei einem Totalausfall der Betätigungseinrichtung, oder bei einem Stromausfall, eine taktil unmittelbar wahrnehmbare Blockierung des Betätigungselements erfolgt.

Dies ist insbesondere insofern vorteilhaft, als auf diese Weise sichergestellt wird, dass das Betätigungselement bei Wegfall der Hilfsenergie, beispielsweise in einem Störungsfall, automatisch blockiert wird. Damit wird dem Bediener bzw. Fahrer unmissverständlich signalisiert, dass sich das System nicht in betriebsbereitem Zustand befindet, bzw. momentan nicht über die Betätigungseinrichtung gesteuert werden kann, dass also beispielsweise eine Betätigung des Automatikgetriebes nicht möglich ist.

Nach einer weiteren Ausführungsform der vorliegenden Erfindung umfasst die Betätigungseinrichtung ferner eine Vorrichtung zur mechanischen Entriegelung der Sperreinrichtung. Diese Entriegelungsvorrichtung steht als sog. Override-Funktion insbesondere für den Fall von Fehlfunktionen des Antriebs der Sperreinrichtung zur Verfügung. Somit ermöglicht die Entriegelungsvorrichtung mittels einer manuellen mechanischen Entsperrung der Sperreinrichtung, dass das Betätigungselement, beispielsweise bei einem Ausfall lediglich der Sperreinrichtung oder des Aktuators, dennoch im Sinne eines Notbetriebs betätigt werden kann.

Im Folgenden wird die Erfindung anhand lediglich Ausführungsbeispiele darstellender Zeichnungen näher erläutert. Dabei zeigt:
- **Fig. 1**: in schematischer isometrischer sowie teilweise geschnittener Darstellung eine Ausführungsform einer Betätigungseinrichtung für ein Fahrzeuggetriebe;
- **Fig. 2**: **in** einer **Fig. 1** entsprechenden Darstellung die Betätigungseinrichtung gemäß **Fig. 1** in einer Betätigungsstellung;

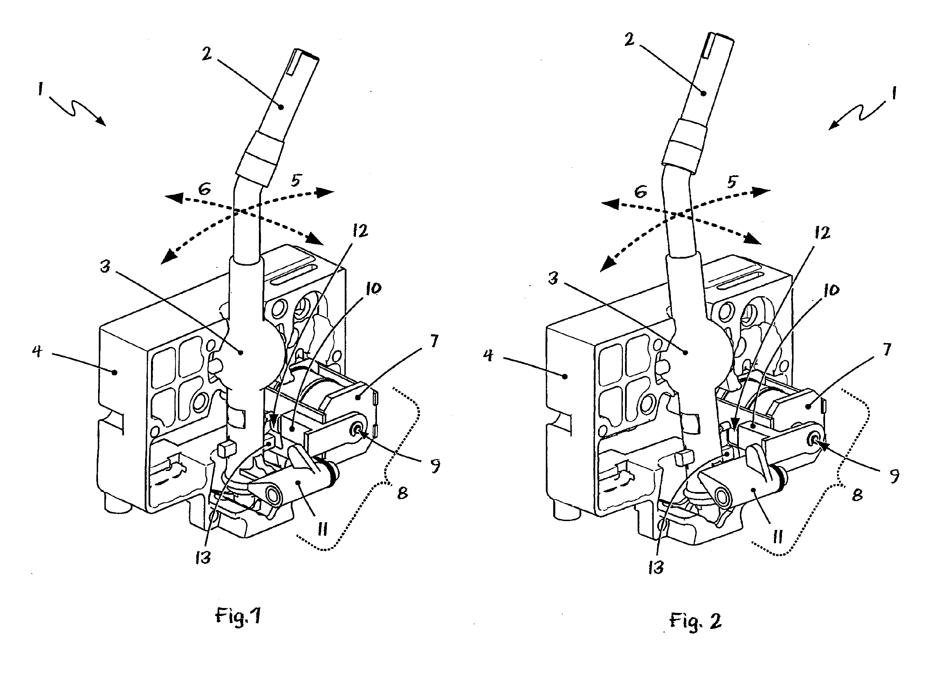

- **Fig. 1**: in schematischer Darstellung eine weitere Ausführungsform einer Betätigungseinrichtung in der Draufsicht in einer ersten Aktuatorstellung;

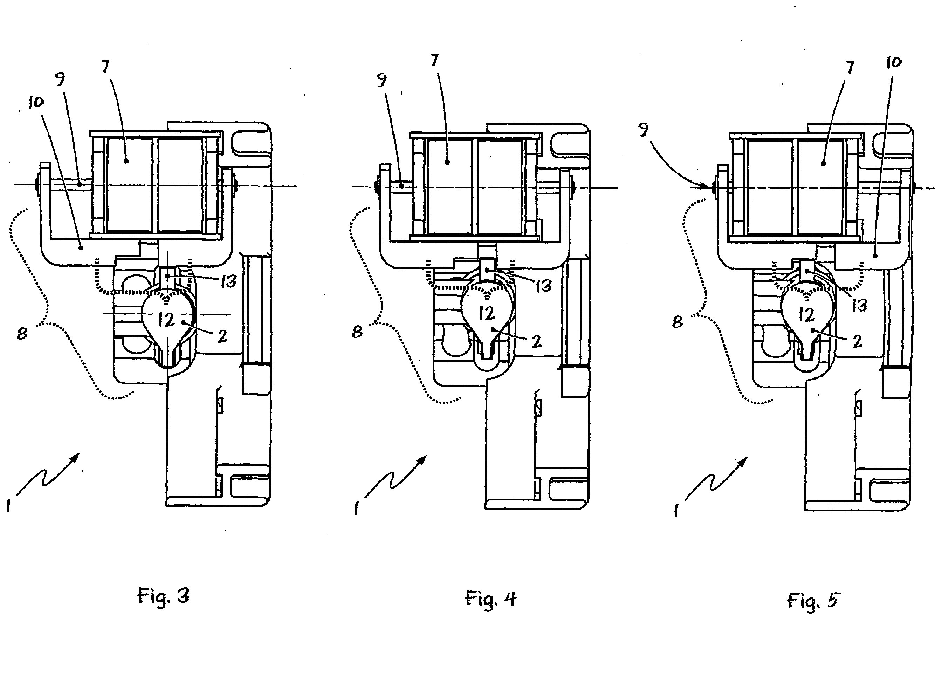

- **Fig. 2**: in einer **Fig. 3** entsprechenden Darstellung und Ansicht die Betätigungseinrichtung gemäß **Fig. 3** in einer zweiten Aktuatorstellung; und
- **Fig. 3**: in einer **Fig. 3** und **4** entsprechenden Darstellung und Ansicht die Betätigungseinrichtung gemäß **Fig. 3** und **4** in einer dritten Aktuatorstellung.

**Fig. 1** zeigt in isometrischer Darstellung eine Ausführungsform einer erfindungsgemäßen Betätigungseinrichtung 1. Bei diesem Ausführungsbeispiel handelt es sich um eine Betätigungseinrichtung 1 für ein automatisiertes Fahrzeuggetriebe.

Man erkennt in der Darstellung von **Fig. 1** und **Fig. 2** zunächst einmal den Schalthebel 2 , der mittels einer Gelenkkugel 3 in einem hälftig geschnitten dargestellten Gehäuse 4 der Betätigungseinrichtung 1 angeordnet ist. Der Schalthebel 2 lässt sich dank der Aufhängung mittels Gelenkkugel 3 sowohl in Fahrtrichtung vor und zurück (5), als auch quer zur Fahrtrichtung hin und her bewegen (6), wie durch die beiden strichlierten Pfeile 5 bzw. 6 angedeutet.

Dabei sorgt eine einen Aktuator 7 umfassende Sperreinrichtung 8 dafür, dass die Bewegungsfreiheit, bzw. der zur Betätigung jeweils zur Verfügung stehende Schaltweg und die jeweils zur Verfügung stehenden Schaltrichtungen am Betätigungshebel 2 in Abhängigkeit vom Betriebs- bzw. Fahrzustand des Kraftfahrzeugs, sowie in Abhängigkeit weiterer Randbedingungen, jeweils eingeschränkt bzw. freigegeben werden kann. Bei den weiteren Randbedingungen kann es sich dabei insbesondere, jedoch keineswegs ausschließlich, um den Zustand des Bremspedals (getreten/nicht getreten) oder um den Zustand des Zündschlosses (Zündung eingeschaltet/ausgeschaltet) handeln.

Die Sperreinrichtung 8 der Betätigungseinrichtung 1 bzw. des Schalthebels 2 gemäß **Fig. 1** und **2** wird dabei lediglich durch einen einzigen elektromagnetischen Aktuator 7 gesteuert. Die Sperreinrichtung 8 umfasst neben dem Aktuator 7 und dessen Ankerstift 9 dabei insbesondere eine quer zur Fahrtrichtung hin und her bewegliche Sperrkulisse 10 sowie ein indirekt von der Sperrkulisse 10 angetriebenes, weiteres Sperrelement 11. Man erkennt, dass Ankerstift 9 und Sperrkulisse 10 sich in der Darstellung gemäß **Fig. 1** zeichnungsbezogen an ihrem linken Anschlag befinden, während Ankerstift 9 in der Darstellung gemäß Fig. 2 aus dem Korpus des Aktuators 7 ausgefahren, und damit auch die Sperrkulisse 10 zeichnungsbezogen nach rechts verschoben ist.

Die Sperrkulisse 10 besitzt eine definierte Aussparungskontur 12 (siehe auch **Fig. 3** bis 5). Die Aussparungskontur 12 korrespondiert dabei mit einem im unteren Bereich des Schalthebels 2 angeordneten Sperrvorsprung 13. Je nach horizontaler Position des Ankerstifts 9 des Aktuators 7 bzw. der mit dem Ankerstift 9 verbundenen Sperrkulisse 10 wird damit die Bewegungsfreiheit des Schalthebels 2 in Fahrtrichtung des Kraftfahrzeugs (also die Vor- und Zurück-Bewegung des Schalthebels, siehe strichlierter Pfeil 5) mehr oder weniger stark eingeschränkt.

Das zusätzliche Sperrelement 11 hingegen, das über die Sperrkulisse 10 indirekt ebenfalls vom Aktuator 7 angetrieben wird, dient der Sperrung bzw. situationsabhängigen Einschränkung der Bewegungsfreiheit des Schalthebels 2 quer zur Fahrtrichtung (strichlierter Pfeil 6). Mittels Steuerung des zusätzlichen Sperrelements 11 durch den Aktuator 7 lässt sich somit festlegen, ob der Schalthebel 2 zwischen den in Fahrtrichtung nebeneinander liegenden, verschiedenen Schaltgassen hin und her bewegt werden kann, oder ob diese Hin- und Herbewegung situationsabhängig gesperrt sein soll.

Der entscheidende Vorteil der dargestellten Betätigungseinrichtung liegt somit darin, dass hier mit lediglich einem einzigen Aktuator 7 sowohl eine mehrstufige Sperrung der Beweglichkeit des Schalthebels 2 in Fahrtrichtung 5, als auch eine situationsabhängigen Sperrung der Beweglichkeit des Schalthebels 2 quer zur Fahrtrichtung 5 realisiert werden kann. Auf diese Weise lassen sich in erheblichem Maße konstruktiver Aufwand, Bauraum und Gewicht sowie nicht zuletzt auch Kosten in beträchtlichem Umfang einsparen.

Die **Fig. 3** bis **5** zeigen eine weitere Ausführungsform einer Betätigungseinrichtung 1 mit Sperreinrichtung gemäß der vorliegenden Erfindung. Die in den **Fig. 3** bis **5** gezeigte Sperreinrichtung 1 mit Aktuator 7, Ankerstift 9, Sperrkulisse 10, Aussparungskontur 12 und Sperrvorsprung 13 stimmt im Wesentlichen mit den entsprechenden Bauteilen der Betätigungseinrichtung 1 gemäß **Fig. 1** und **2** überein.

Man erkennt in den **Fig. 3** bis **5** zunächst einmal den Aktuator 7, der über den Ankerstift 9 mit der Sperrkulisse 10 verbunden ist. Die Sperrkulisse 10 weist wieder eine Aussparungskontur 12 auf, die mit einem Spenvorsprung 13 am (hier in der Draufsicht nur im Querschnitt erkennbaren) Betätigungshebel 2 korrespondiert. Aus den Darstellungen der **Fig. 3** bis 5 geht besonders deutlich hervor, dass die Beweglichkeit des Betätigungshebels 2 in Fahrtrichtung, abhängig von der jeweiligen Position der Sperrkulisse 10, entweder vollständig gesperrt ist **(****Fig. 3****),** oder durch die Sperrkulisse 10 teilweise **(****Fig. 5****)** bzw. vollständig freigegeben ist **(****Fig. 4****).**

Bei dem dargestellten Ausführungsbeispiel ist der Aktuator 7 so ausgeführt, dass er im unbestromten Zustand seine Mittelstellung gemäß **Fig. 4** einnimmt. Dies ist für den Fall des dargestellten Ausführungsbeispiels vorteilhaft insofern, als der Wählhebel bei Stromausfall oder Ausfall des Aktuators dann immer noch zwischen seiner Ausgangsstellung gemäß **Fig. 3** und seiner Mittelstellung gemäß **Fig. 4** hin und her bewegt werden kann.

Im Ergebnis wird damit deutlich, dass mit der Erfindung eine Betätigungseinrichtung für elektrisch bzw. elektronisch gesteuerte technische Systeme, insbesondere für Gangwechselgetriebe von Kraftfahrzeugen geschaffen wird, bei der die notwendigen Sperrfunktionen des Betätigungshebels mit besonders geringem konstruktivem Aufwand und mit vergleichsweise niedrigen Kosten realisierbar sind. Somit lässt sich beim Kraftfahrzeug mittels der erfindungsgemäß realisierbaren Sperrfunktionen - im Sinne der Betriebs- und Fahrsicherheit - die Anwahl insbesondere von unzulässigen Schaltfolgen bzw. Getriebezuständen zuverlässig verhindern. Ferner kann so die Unzulässigkeit bestimmter Schaltanforderungen dem Bediener bzw. Fahrer taktil klar signalisiert werden.

Die Erfindung leistet damit einen wichtigen Beitrag zur Sicherheit, Ergonomie und Bedienbarkeit von technischen Systemen, insbesondere bei der Anwendung im Bereich der Kraftfahrzeugsysteme und -getriebe.

### Bezugszeichenliste

- 1: Betätigungseinrichtung
- 2: Schalthebel, Betätigungshebel
- 3: Gelenkkugel
- 4: Gehäuse
- 5: Fahrtrichtung
- 6: Querrichtung
- 7: Aktuator
- 8: Sperreinrichtung
- 9: Ankerstift
- 10: Sperrkulisse
- 11: Sperrelement
- 12: Aussparungskontur
- 13: Sperrvorsprung

## Patentansprüche

1. Betätigungseinrichtung (1) für ein technisches System, insbesondere zur Auswahl von Schaltstufen eines shift-by-wire-Gangwechselgetriebes, die Betätigungseinrichtung (1) umfassend einen Schalthebel (2) mit zumindest zwei Schaltstellungen, wobei die Betätigungseinrichtung (1) eine Sperreinrichtung (8) mit zumindest einem mit Hilfsenergie angetriebenen einzigen Aktuator (7) zur Reduzierung des Schaltwegs des Schalthebels (2), bzw. zur Sperrung des Schalthebels (2) aufweist, wobei der einzige Aktuator (7) zumindest drei unterschiedliche Schaltzustände aufweist, **dadurch gekennzeichnet, dass** durch den einzigen Aktuator (7) sowohl eine mehrstufige Sperrung der Beweglichkeit des Schalthebels (2) in Fahrtrichtung (5) als auch eine situationsabhängige Sperrung der Beweglichkeit des Schalthebels (2) quer zu der Fahrtrichtung (5) realisierbar ist.

2. Betätigungseinrichtung (1) nach Anspruch 1, **dadurch gekennzeichnet, dass** die Sperreinrichtung (8) neben dem einzigen Aktuator (7) einen Ankerstift (9), eine quer zur Fahrtrichtung (5) hin und her bewegliche Sperrkulisse (10) sowie ein indirekt von der Sperrkulisse (10) angetriebenes weiteres Sperrelement (11) aufweist, wobei das weitere Sperrelement (11) zur Sperrung oder zur situationsabhängigen Einschränkung der Bewegungsfreiheit des Schalthebels (2) quer zur Fahrtrichtung (5) dient.

3. Betätigungseinrichtung (1) nach einem der Ansprüche 1 oder 2, **dadurch gekennzeichnet, dass** der Schalthebel (2) zwischen zwei Enden die Kontur einer Gelenkkugel (3) aufweist, und der Schalthebel (2) mittels der Gelenkkugel (3) in einem Gehäuse (4) gelagert ist, wobei der Schalthebel (2) durch die Lagerung der Gelenkkugel (3) in dem Gehäuse (4) in Fahrtrichtung (5) und quer zu dieser bewegbar ist.

4. Betätigungseinrichtung (1) nach Anspruch 3, **dadurch gekennzeichnet, dass** die Gelenkkugel (3) zumindest zwei Vorsprünge aufweist, welche in Ausnehmungen in dem Gehäuse (4) greifen, wodurch die Beweglichkeit des Schalthebels (2) in Fahrtrichtung (5) beschränkbar ist.

5. Betätigungseinrichtung (1) nach einem der Ansprüche 1 bis 4, **dadurch gekennzeichnet, dass** sich die Sperreinrichtung (8) und der einzige Aktuator (7) bei Fehlen der Hilfsenergie in Blockierstellung befinden.

6. Betätigungseinrichtung (1) nach Anspruch 5, **dadurch gekennzeichnet, dass** die Betätigungseinrichtung (1) eine mechanische Entriegelungsvorrichtung zur Überwindung der Sperreinrichtung (8) umfasst.

## Claims

1. Activation device (1) for a technical system, in particular for the selection of shift steps of a shift-by-wire gear change transmission, the activation device (1) comprising a shift lever (2) with at least two shift positions, the activation device (1) having a locking device (8) with at least a single actuator (7), driven by auxiliary energy, for reducing the shift travel of the shift lever (2) or for locking the shift lever (2), the single actuator (7) having at least three different shift states, **characterized in that**, by means of the single actuator (7), both multi-step locking of the movability of the shift lever (2) in the driving direction (5) and situation-dependent locking of the movability of the shift lever (2) transversely to the driving direction (5) can be implemented.

2. Activation device (1) according to Claim 1, **characterized in that** the locking device (8) has in addition to the single actuator (7) an armature pin (9), a locking slide (10) movable to and fro transversely to the driving direction (5), and a further locking element (11) driven indirectly by the locking slide (10), the further locking element (11) serving for the locking or the situation-dependent restriction of the freedom of movement of the shift lever (2) transversely to the driving direction (5).

3. Activation device (1) according to either one of Claims 1 and 2, **characterized in that** the shift lever (2) has between two ends the contour of a joint ball (3), and the shift lever (2) is mounted in a housing (4) by means of the joint ball (3), the shift lever (2) being movable in the driving direction (5) and transversely to this as a result of the mounting of the joint ball (3) in the housing (4).

4. Activation device (1) according to Claim 3, **characterized in that** the joint ball (3) has at least two projections which engage in recesses in the housing (4), with the result that the movability of the shift lever (2) in the driving direction (5) can be restricted.

5. Activation device (1) according to one of Claims 1 to 4, **characterized in that** the locking device (8) and the single actuator (7) are in the blocking position when auxiliary energy is absent.

6. Activation device (1) according to Claim 5, **characterized in that** the activation device (1) comprises a mechanical release device for overcoming the locking device (8).

## Revendications

1. Dispositif d'actionnement (1) pour un système technique, en particulier pour la sélection de rapports de changement de vitesses d'une boîte de vitesse à changement de vitesses à commande électrique, le dispositif d'actionnement (1) comprenant un levier de sélection (2) avec au moins deux positions de sélection, le dispositif d'actionnement (1) présentant un dispositif de blocage (8) avec au moins un actionneur unique (7) entraîné par une énergie auxiliaire pour réduire la course de sélection du levier de sélection (2), ou pour bloquer le levier de sélection (2), l'actionneur unique (7) présentant au moins trois états de sélection différents, **caractérisé en ce qu'**un blocage à plusieurs degrés de la mobilité du levier de sélection (2) dans la direction de conduite (5) ainsi qu'un blocage, dépendant de la situation, de la mobilité du levier de sélection (2) transversalement à la direction de conduite (5) peuvent être réalisés par l'actionneur unique (7).

2. Dispositif d'actionnement (1) selon la revendication 1, **caractérisé en ce que** le dispositif de blocage (8) présente, en plus de l'actionneur unique (7), une goupille d'ancrage (9), une coulisse de blocage (10) déplaçable d'avant en arrière transversalement à la direction de conduite (5), ainsi qu'un élément de blocage supplémentaire (11) entraîné indirectement par la coulisse de blocage (10), l'élément de blocage supplémentaire (11) servant à bloquer ou à limiter, en fonction de la situation, la liberté de mouvement du levier de sélection (2) transversalement à la direction de conduite (5).

3. Dispositif d'actionnement (1) selon l'une quelconque des revendications 1 ou 2, **caractérisé en ce que** le levier de sélection (2) présente entre deux extrémités le contour d'une rotule d'articulation (3), et le levier de sélection (2) est supporté au moyen de la rotule d'articulation (3) dans un boîtier (4), le levier de sélection (2) pouvant être déplacé par le support sur palier de la rotule d'articulation (3) dans le boîtier (4) dans la direction de conduite (5) et transversalement à celle-ci.

4. Dispositif d'actionnement (1) selon la revendication 3, **caractérisé en ce que** la rotule d'articulation (3) présente au moins deux saillies, lesquelles viennent en prise dans des évidements dans le boîtier (4), de sorte que la mobilité du levier de sélection (2) dans la direction de conduite (5) peut être limitée.

5. Dispositif d'actionnement (1) selon l'une quelconque des revendications 1 à 4, **caractérisé en ce que** le dispositif de blocage (8) et l'actionneur unique (7) sont dans la position de blocage en l'absence d'alimentation en énergie auxiliaire.

6. Dispositif d'actionnement (1) selon la revendication 5, **caractérisé en ce que** le dispositif d'actionnement (1) comprend un dispositif de déverrouillage mécanique pour surmonter le dispositif de blocage (8).
